# EUROPEAN PATENT APPLICATION

(11) **EP 2 682 183 A2**
(43) Date of publication of application: **08.01.2014**
(21) Application number: 12183867.6
(22) Date of filing: 11.09.2012
(51) Int. Cl.: B01J 13/00

(54) **Bactericidal colloids and a method for manufacturing of bactericidal colloids from a nanosilver concentrate**

(30) Priority: 26.06.2012 PL 39967512
(71) Applicant: Future Sp. z o.o., 90-752 Lodz (PL)
(72) Inventor: Moscicki, Andrzej, 91-503 Lodz (PL); Mazurek, Przemyslaw, 94-007 Lodz (PL)
(74) Representative: Pawlowski, Adam

(57) **Abstract**

A method for manufacturing of bactericidal colloids from a colloidal nanosilver concentrate. Performing the following steps in separate branches of a technology line: drying, in a vacuum dryer, the colloidal nanosilver concentrate with particles having a size from 3 nm to 8 nm to obtain a dry matter, placing the dry matter in a quartz vacuum chamber of a reactor heated by a resistance wire, heating the chamber to the temperature of 180°C-210°C, sucking out, by a vacuum pump, evaporations in order to purify the dry matter from pollutants during 1-2 hours, and next mixing the purified dry matter, using a magnetic stirrer, with an alcohol at a ratio of 1:10 during about 1 hour, and then drying the mixture in a vacuum dryer to obtain a dry matter, mixing the dry matter, in a magnetic stirrer during about 1 hour, with a solvent selected for a given branch of the technology line, preferably selected from a group comprising: distilled water, alcohols, paraffin oil, paraffin compounds, liquid aliphatic hydrocarbon compounds, in the amount providing concentration of nanosilver up to 5,000 ppm, and next pouring the mixture into a sonicator tank, and homogenising the mixture using an ultrasound probe with an operating frequency of 20 kHz during 5 to 10 minutes.

## Description

This present invention related to a method for manufacturing of bactericidal colloids from a nanosilver concentrate and to bactericidal colloids.

There are different methods of manufacturing nanosilver colloids.

For example, a US patent application US2003185889 presents a colloidal nanosilver solution, in which the diameter of the particles equals 1 nm to 100 nm, and the content of silver in the solution amounts to 0.001 % to 0.4% by weight and may contain a gelling agent, such as starch or its derivatives. The document also presents a method of obtaining nanosilver colloidal solution with gelling agent, where aminosilver ions developed by dissolving silver oxide in ammonium hydroxide are mixed in water with gelling agent.

A US patent application US2008064767 presents a method for preparing a colloidal nanosilver solution containing approx. 1.5% of nanosilver particles by weight of a mean size below 10 nm, wherein silver salt, ionic chelating agent, stabilizing agent, reducing agent, solvent and gas are homogeneously mixed together

A US patent application US2009104437 presents a method for obtaining silver nanoparticles colloid through combining a reduction solution and a silver nitrate solution in a container; and then stabilizing the silver colloid nano-particles by combining a stabilizing solution to the container.

A US patent application US2007013317 presents a colloidal dispersion of nanoparticles containing at least one conductive material in a liquid medium, wherein the conductive material takes over electric conductors selected from a group consisting of aluminium, antimony, bismuth, carbon, copper, gold, iron, lead, molybdenum, nickel, platinum, silver, tin, tungsten, zinc and combinations thereof, whereby the nanoparticles have diameters lower than 100 nm.

A US patent application US2009013825 presents a nanosilver colloid with particle sizes below 10 nm, used especially for bacteria, viruses and fungi elimination, developed in the process of synthesis involving the reaction of silver salt and anionic surfactant or non-ionic surfactant and reducing agent in water at room temperature.

These methods, however, require an access to high-tech apparatus, as well as specialised staff to operate this apparatus.

The market offers silver colloids of the concentration of approx. 1000 ppm, which, after diluting, can be used as bactericides in different products, whilst the bactericidal activity is already observed at the concentration above 10 ppm. The subject application often requires supply of nanosilver colloid in a relevant solvent: water, specific alcohol, appropriate oil, etc., depending on the target application. Although water colloids are fairly widely accessible, ordering a colloid based on a given solvent may require submitting a special order to the producer, which involves additional waiting time and high costs or is difficult to accomplish. A particular problem occurs in the case of the colloids of silver nanoparticles of a small diameter, i.e. 3 to 8 nm, available only from few producers.

In retail, there are available highly concentrated nanosilver solutions with particle sizes from 3 to 9 nm and concentration of approx. 100,000 ppm. For example Amepox company from 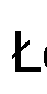 ódź, Poland offers a preparation NanoSilver 100K. This kind of preparation has a high content of pollutants, reaching a few %, probably due to its specific manufacturing process. For example, in the above mentioned preparation 100K, the dry matter contains 95% of pure silver and 5% of pollutants, such as carbon monoxide, carbon dioxide, nitrates and nitrites. These residues significantly deteriorate biocidal properties of nanosilver, which is undesirable in highly specialised applications, for instance in food and pharmaceutical industry. Therefore, these concentrates are not suitable for direct dilution.

It would be preferable to develop a method of manufacturing bactericidal colloids from a nanosilver concentrate, which would allow to obtain colloids of a high purity, based on desirable solvents, which could be different from the solvent of the concentrate. It would allow free manufacturing of colloids for specific purposes from concentrates available in retail.

The object of the invention is a method for manufacturing of bactericidal colloids from a colloidal nanosilver concentrate. In separate branches of a technology line: drying, in a vacuum dryer, the colloidal nanosilver concentrate with particles having a size from 3 nm to 8 nm to obtain a dry matter, placing the dry matter in a quartz vacuum chamber of a reactor heated by a resistance wire, heating the chamber to the temperature of 180°C-210°C, sucking out, by a vacuum pump, evaporations in order to purify the dry matter from pollutants during 1-2 hours, and next mixing the purified dry matter, using a magnetic stirrer, with an alcohol at a ratio of 1:10 during about 1 hour, and then drying the mixture in a vacuum dryer to obtain a dry matter, mixing the dry matter, in a magnetic stirrer during about 1 hour, with a solvent selected for a given branch of the technology line, preferably selected from a group comprising: distilled water, alcohols, paraffin oil, paraffin compounds, liquid aliphatic hydrocarbon compounds, in the amount providing concentration of nanosilver up to 5,000 ppm, and next pouring the mixture into a sonicator tank, and homogenising the mixture using an ultrasound probe with an operating frequency of 20 kHz during 5 to 10 minutes.

The method of manufacturing a colloid from a nanosilver concentrate, according to the invention, allows to obtain a bactericidal colloid from a nanosilver concentrate having a particle size of 3nm to 8 nm, concentration up to 5000 ppm, and having high purity and sterility, providing better bactericidal properties to the final products and facilitating the use of the colloid in products of different industries, for example of food or pharmaceutical industry. The method allows to obtain a colloid based on a wide range of solvents, which can be selected depending on the desired application of the colloid and which can be different from the solvent on which the concentrate is based.

The invention is shown by means of exemplary embodiment on a drawing, in which:

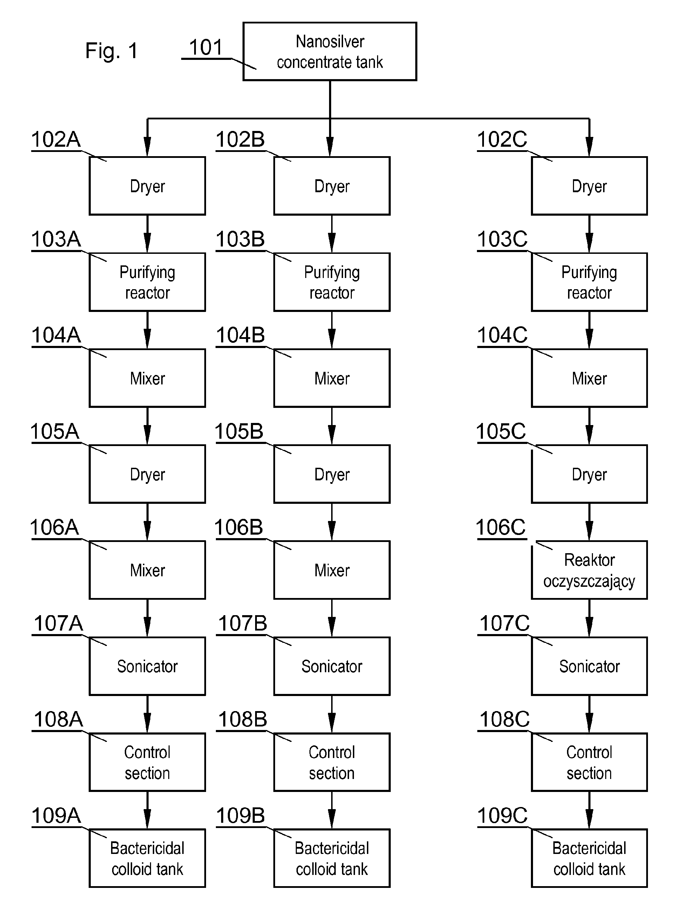

Fig. 1 presents a diagram of a technological line for manufacturing a bactericidal colloid from a nanosilver concentrate.

The method according to the invention is adapted for manufacturing bactericidal colloid from a nanosilver concentrate with particle sizes from 3 to 8 nm and containing pollutants undesirable for the final product. Such small particles of a size similar to silver (Ag) atoms require special treatment and cannot by efficiently processed using other methods, which are usable for colloids of particle sizes above ten nanometres.

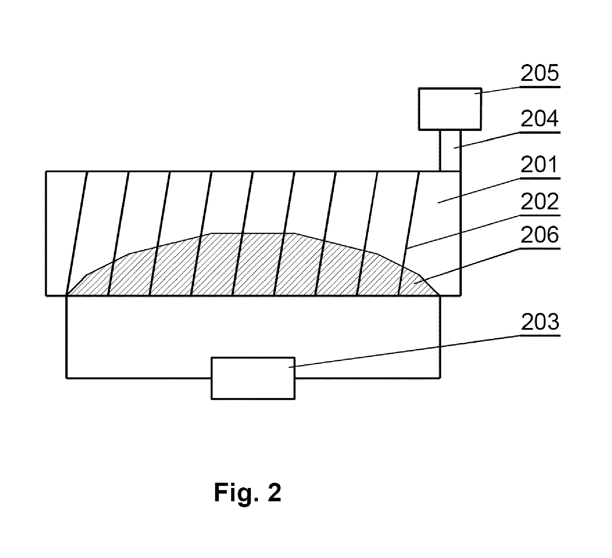

Nanosilver concentrate is collected from a tank 101 and supplied to separate branches A, B, C of the technological line, so as to develop colloids based on different solvents for different branches, meant for different industries and with different quality requirements. This makes the process optimal for conditions of any desirable colloid, whilst the requirements for one kind of final product have no impact on the requirements for another product. In each of the branches, the concentrate is placed in a vacuum dryer 102A-102C, in which the primal solvent of the colloid undergoes evaporation to obtain dry matter, that is silver with pollutants. The dry matter has the form of gritted powder, in which silver molecules undergo gritting, but the process is reversible. The dry matter is supplied to a purifying reactor 103A-103C, presented schematically in Fig. 2. The reactor is a quartz pipe 201 with a heating coil 202 wound around it, connected to an adjustable source of alternating current 203. The pipe 201 is filled in approx. 1/3 of its volume with the dry matter 206 and, using a vacuum pump 205, vacuum is generated inside the pipe. The temperature of the coil wound around the pipe is adjusted so as to obtain the temperature of 180°C do 210°C inside the pipe. As a result of the heating, which is conducted within 1 to 2 hours, a release of absorbed gasses from the surface of nanosilver is performed. The temperature causes thermal decomposition of pollutants, such as nitrates, which are then extracted by an extractor 204 using a vacuum pump 205. After the extraction of pollutants, the dry matter has much higher level of purity, usually about 99%. The next step involves pouring alcohol (e.g. methyl alcohol) on the purified dry matter, in the amount approx. ten times higher by volume than the volume of the dry matter. For about 1 hour the solution of alcohol and silver is mixed in a stirrer 104A-104C, preferably a magnetic stirrer, which guarantees high level of purity. Washing in alcohol partially dissolves the hydrocarbon protective shell around the individual molecules of nanosilver, i.e. their further purification. Next, the concentrate of nanosilver is dried in a vacuum dryer 105A-105C in order to evaporate the alcohol. This way a dry matter is obtained with silver content of approx. 99.5%. Then, the purified dry matter is dissolved in a solvent appropriate for a given output colloid, in a stirrer 106A-106C, slowly stirring for about 1 hour. The amount of solvent is selected depending on the desired final concentration, for example to obtain the concentration of 1000 ppm per each 1g of dry matter, 1000 g of solvent is applied. Thus obtained mixture is poured into a sonicator tank 107A-107C. The sonicator 107A-107C, also called an ultrasonic homogeniser or an ultrasonic disintegrator, has a stirring probe placed in the tank, with induced vibration thanks to which the liquid is mixed in the tank. Preferably, the vibrations have the frequency of approx. 20 kHz during 5 to 10 minutes. The application of the sonicator provides uniformity of the mixture and consolidation of the colloid, which does not stratify, remaining uniform for a long time, that is for at least several months. The mixture from the sonicator is submitted to quality control at a station 108A-109C, equipped with necessary gauge tools, such as spectrophotometer, microscopes, Malvern Zetasizer Nano, analytical balance and other tools, required for measuring the parameters of bactericidal colloid. After thorough analysis of the parameters, the colloid is moved to tanks 109A-109C, in which it is stored and prepared for transport.

### Example 1.

In a separate branch of the technological line, 1,500 ml of Nanosilver 100K preparation by Amepox, 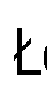 ódź was dried to obtain 150 g of dry matter, which was heated in a purifying reactor for 1 hour in a temperature of 180°C. A dry matter with 99.1% nanosilver content was obtained in the process. Afterwards, the dry matter was mixed with 1,500 ml of methyl alcohol and dried, thus obtaining a dry matter with 99.5% nanosilver content. The dry matter was divided into 10 portions of 15 g each, and each portion was mixed with 10,000 ml of distilled water in a stirrer for 1 hour, and then placed in a sonicator and mixed by vibrating (at a frequency of 20 kHz) for 5 minutes. A nanosilver colloid in water with a concentration of 1,500 ppm was obtained in the process.

### Example 2.

In a separate branch of the technological line, 1,500 ml of Nanosilver 100K preparation by Amepox, 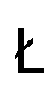 ódź was dried to obtain 150 g of dry matter, which was heated in a purifying reactor for 1 hour in a temperature of 180°C. A dry matter with 99.1% nanosilver content was obtained in the process. Afterwards, the dry matter was mixed with 1,500 ml of methyl alcohol and dried, thus obtaining a dry matter with 99.5% nanosilver content. The dry matter was divided into 10 portions of 15 g each, and each portion was mixed with 9,000 ml of distilled water and mixed in a stirrer for 1 hour. Next, 1,000 ml of nanosillica water colloid (SiO₂) of 12nm size and 20,000 ppm concentration was added, and placed in a sonicator, where it was mixed by vibrating (at a frequency of 20 kHz) for 5 minutes. A colloid of nanosilver with a concentration of 1,500 ppm and nanosillica with a concentration of 2,000 ppm in water was obtained in the process. The content of nanosillica in the colloid facilitates the acceptance of pigments in the colloid.

### Example 3.

In a separate branch of the technological line, 1,000 ml of Nanosilver 100K preparation by Amepox, 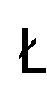 ódź was dried to obtain approx.150g of a dry matter, which was heated in a purifying reactor for 2 hours in a temperature of 200°C. A dry matter with 99.3% nanosilver content was obtained in the process. Afterwards, the dry matter was mixed with 1 litre of methyl alcohol and dried, thus obtaining a dry matter with 99.6% nanosilver content. The dry matter was divided into 5 portions of 20g each, and each portion was mixed with 5,000 ml of paraffin compound, mixed in a stirrer for 1 hour, and then placed in a sonicator and mixed by vibration (at a frequency of 20 kHz) for 10 minutes. A nanosilver colloid with a concentration of 4,000 ppm in paraffin was obtained in the process.

### Example 4.

In a separate branch of the technological line, 420 ml of Nanosilver 100K preparation by Amepox, 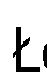 ódź was dried to obtain approx. 42g of dry matter, which was heated in a purifying reactor for 1 hour in a temperature of 210°C. A dry matter with 99.2% nanosilver content was obtained in the process. Afterwards, the dry matter was mixed with 420 ml of methyl alcohol and dried, thus obtaining a dry matter with 99.5% nanosilver content. The dry matter was divided into 10 portions of 4.2g each, and each portion was mixed with 1,000 ml of ethyl alcohol, mixed in a stirrer for 1 hour, and then placed in a sonicator and mixed by vibration (at a frequency of 20 kHz) for 7 minutes. A nanosilver colloid with a concentration of 4,200 ppm in ethyl alcohol was obtained in the process.

### Example 5.

In a separate branch of the technological line, 900ml of Nanosilver 100K preparation by Amepox, 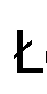 ódź was dried to obtain approx. 90g of dry matter, which was heated in a purifying reactor for 2 hours in a temperature of 180°C. A dry matter with 99.2% nanosilver content was obtained in the process. Afterwards, the dry matter was mixed with 900 ml of methyl alcohol and dried, thus obtaining a dry matter with 99.5% nanosilver content. The dry matter was divided into 25 portions of 3.6 g each, and each portion was mixed with 1,000 ml of aliphatic hydrocarbon, mixed in a stirrer for 1 hour, and then placed in a sonicator and mixed by vibration (at a frequency of 20 kHz) for 5 minutes. A nanosilver colloid with a concentration of 3,600 ppm in aliphatic hydrocarbon was obtained in the process.

## Claims

1. A method for manufacturing of bactericidal colloids from a colloidal nanosilver concentrate, **characterized by** performing the following steps in separate branches of a technology line: drying, in a vacuum dryer, the colloidal nanosilver concentrate with particles having a size from 3 nm to 8 nm to obtain a dry matter, placing the dry matter in a quartz vacuum chamber of a reactor heated by a resistance wire, heating the chamber to the temperature of 180°C-210°C, sucking out, by a vacuum pump, evaporations in order to purify the dry matter from pollutants during 1-2 hours, and next mixing the purified dry matter, using a magnetic stirrer, with an alcohol at a ratio of 1:10 during about 1 hour, and then drying the mixture in a vacuum dryer to obtain a dry matter, mixing the dry matter, in a magnetic stirrer during about 1 hour, with a solvent selected for a given branch of the technology line, preferably selected from a group comprising: distilled water, alcohols, paraffin oil, paraffin compounds, liquid aliphatic hydrocarbon compounds, in the amount providing concentration of nanosilver up to 5,000 ppm, and next pouring the mixture into a sonicator tank, and homogenising the mixture using an ultrasound probe with an operating frequency of 20 kHz during 5 to 10 minutes.
